# EUROPÄISCHE PATENTANMELDUNG

(11) **EP 1 698 657 A1**
(43) Veröffentlichungstag der Anmeldung: **06.09.2006**
(21) Anmeldenummer: 05011974.2
(22) Anmeldetag: 03.06.2005
(51) Int. Cl.: C08K 3/10, C08K 3/22, C08K 9/04, C08L 27/06, C08J 3/20, B29B 7/00, C08K 5/098

(54) **Verbesserte PVC-Zusammensetzung**

(30) Priorität: 05.03.2005 DE 102005010242
(71) Anmelder: REHAU AG + Co, 95111 Rehau (DE)
(72) Erfinder: Steffl, Udo, 95466 Weidenberg (DE); Wilfert, Michaela, 95030 Hof (DE)

(57) **Zusammenfassung**

Eine PVC-Zusammensetzung mit erhöhter Thermostabilität, Oberflächenqualität und Kerbschlagzähigkeit besteht erfindungsgemäß aus mindestens folgenden Komponenten in folgenden Anteilen:
(I) 100 Gewichtsanteile einer Komponente (A) bestehend aus einem PVC mit einem K-Wert von 55-80 gemäß ISO 1628-2;
(II) 0,1 bis 20 Gewichtsanteile einer Komponente (B), bezogen auf Komponente (A), bestehend aus Calciumcarbonat mit einer im Nanometerbereich liegende Partikelgröße und einem Stearinsäurecoating in einem Anteil von 1 bis 4 Gew.-%;
(III) 0,1 bis 10 Gewichtsanteile einer Komponente (C), bezogen auf Komponente (A), bestehend aus einem Schlagzähmodifier;
(IV) 0,1 bis 10 Gewichtsanteile einer Komponente (D), bezogen auf Komponente (A), bestehend aus einer Stabilisatormischung;
(V) 0,1 bis 10 Gewichtsanteile einer Komponente (E), bezogen auf Komponente (A), die Titandioxid ist;
wobei die Mischung der Komponenten derart erfolgt, dass in einem Heizkühlmischer die Zugabe der Komponente (B) zur Komponente (A) vor Zugabe der Komponenten (C), (D) und (E) erfolgt und die Komponenten (A) und (B) gemeinsam für 30 bis 60 Sekunden gemischt werden, bevor die restlichen Komponenten zugegeben werden.

## Beschreibung

Die vorliegende Erfindung betrifft PVC-Zusammensetzungen mit erhöhter Thermostabilität, Oberflächenqualität und Kerbschlagzähigkeit.

Polyvinylchlorid (PVC) ist einer der bedeutendsten thermoplastischen Kunststoffe, er findet vielfältig Einsatz, beispielsweise im Baubereich, hier vor allem als Werkstoff für Fenster und Rohre.

Die Bedeutung von PVC resultiert unter anderem daraus, dass der Werkstoff sehr preiswert ist, über eine hohe UV-Beständigkeit verfügt und dazu, wie keine anderes Polymeres, in seinem Eigenschaftsbild vielfältig modifizierbar ist. Beispielsweise ist PVC mit einer großen Zahl an Additiven mischbar, wie Füllstoffe, Weichmacher oder Schlagzähmodifier. So lassen sich einerseits weiche bis lederartige, andererseits harte und steife Artikel herstellen.

Nachteilig am PVC ist vor allem seine geringe thermische Beständigkeit, sowohl bei der Verarbeitung, als auch bei der Anwendung. PVC erleidet durch thermische Belastung Schädigungen über Chlorwasserstoffabspaltung (Dehydrochlorierung), Autooxidation und mechanochemische Fragmentierung.

Dieser Nachteil lässt sich durch Zusatz von Thermostabilisatoren teilweise beheben. Als PVC-Stabilisatoren sind dem Fachmann Organozinnverbindungen, Metallcarboxylate auf Basis Barium/Cadminum, Barium/Zink oder Calcium/Zink, Bleiverbindungen bekannt.

Bleiverbindungen gehören zu den ältesten und wirksamsten PVC-Stabilisatoren, sie wurden bis vor Kurzem in nahezu allen PVC-Hart-Anwendungen eingesetzt, vor allem dort, wo es auf beste Thermostabilität in Verbindung mit hoher Witterungsbeständigkeit ankommt. Allerdings werden in den letzten Jahren die Bleistabilisatoren aus ökologischer Sicht zunehmend als bedenklich eingestuft.

Calcium/Zink-Systeme haben wegen Ihrer geringeren Wirksamkeit bis vor kurzem keine große Bedeutung erlangt. Im Zuge von toxikologischen Überlegungen ist das Interesse an physiologisch unbedenklichen Calcium- und Zinkverbindungen merklich gestiegen; es bleibt jedoch der Performancenachteil gegenüber Bleiverbindungen bestehen.
Durch organische Costabilisatoren wie organischen Phosphiten, Epoxyverbindungen, Polyolen oder 1,3-Diketonen, die als solche keine ausreichende thermostabilisierende Wirkung besitzen, wird eine weitere Wirkungssteigerung herbeigeführt.
Auch anorganische Costabilisatoren wie Hydrotalcite sind bekannt und beschrieben.

Der Einsatz von Calciumcarbonat als anorganischer Füllstoff in thermoplastischen Werkstoffen, wie PVC, wird seit vielen Jahren praktiziert. Dieser Zusatz von Calciumcarbonat bringt wirtschaftliche Vorteile, er verbessert darüber hinaus vor allem die Härte und die Steifigkeit des Thermoplasten. Viele Eigenschaften, wie Schlagzähigkeit, Kerbschlagzähigkeit oder Zugfestigkeit werden jedoch ungünstig beeinflusst.
Die Partikelgröße des Calciumcarbonat liegt üblicher Weise in einem Bereich von 1 bis 50 Mikrometer.

Calciumcarbonat-Füllstoffe mit einer Partikelgröße im Nanometer-Maßstab sind bisher lediglich in Polypropylenzusammensetzungen bekannt, wie die US 2003/0060547 A1 lehrt. Derartig gefüllte Polypropylen-Compounds zeigen eine Kerbschlagzähigkeit, die über das Niveau von unverstärktem Polypropylen hinausgeht.

Die bisher bekannten PVC-Hart-Zusammensetzungen weisen neben den Schwächen in der Thermostabilität auch Nachteile in der erzielbaren Oberflächenqualität auf. Dies betrifft vor allem den Baubereich, hier insbesondere Fensterprofile oder plattenförmige Verkleidungen aus PVC-Hart, deren bisher erzielbare Oberflächenqualitäten, insbesondere hinsichtlich Glätte und Glanzgrad, oft unzureichend sind. Hier behilft man sich in der Regel mit einer Folienkaschierung, einer Lackierung oder einer nachträglichen thermischen Glättung. Solche zusätzliche Arbeitsgänge sind allerdings aus Kostengesichtspunkten höchst unerwünscht.

### Aufgabenstellung

Aufgabe der vorliegenden Erfindung ist, eine PVC-Zusammensetzung zur Verfügung zu stellen, welches über eine ökologisch unbedenkliche, jedoch, gegenüber Ca-/Zn-Stabilisatoren deutlich verbesserte Thermostabilität (gemessen als DHC-Wert gemäß ISO 182-2) verfügt und eine besonders hochglänzende und glatte Oberfläche aufweist.

### Lösung der Aufgabe

Die Aufgabe konnte gelöst werden durch die Merkmale gemäß Anspruch 1. Bevorzugte Ausführungen und Weiterbildungen der Erfindung sind in den Unteransprüchen ausgeführt.

Der Fachmann, dem sich die Aufgabe stellt, die Thermostabilität von PVC-Zusammensetzungen zu verbessern, wird in Kenntnis der Literatur bzw. des Standes der Technik, also auch der oben genannten US 2003/0060547 A1, nicht in Erwägung ziehen, dass der Ersatz von Calciumcarbonat-Mikropartikel durch Calciumcarbonat-Nanopartikel die Aufgabe löst.

Um so überraschender war der Befund, dass bei PVC-Zusammensetzungen mit Thermostabilisatoren auf Basis von Calcium-/Zink-Systemen ein Ersatz der üblichen Calciumcarbonatfüllstoffe, deren Teilchengröße im Mikrometer-Maßstab liegt, durch solche deren Teilchengröße im Nanometerbereich liegt, erfindungsgemäß insbesondere die Thermostabilität (bestimmt als DHC-Wert nach ISO 182-2) deutlich verbessert und vor allem auch die Oberflächenqualität (bestimmt als Glanzgrad nach DIN 67530) erhöht, darüber hinaus auch noch die Kerbschlagzähigkeit verbessert.

Diese Vorteile der erfindungsgemäßen Zusammensetzungen im Unterschied zu solchen nach dem Stand der Technik zeigt eindrucksvoll der Vergleich von Beispiel 1 in Tabelle 1 mit dem Vergleichsbeispiel 1 in Tabelle 2.

Erfindungsgemäß kann bei Erhöhung des Anteils an nanoskaligen Calciumcarbonatpartikein sogar noch die Zugabemenge des organischen Schlagzähmodifiers reduziert werden, ohne dass Kerbschlagzähigkeit, Thermostabilität oder Glanzgrad ungünstig beeinflusst werden. Dies zeigt der Vergleich von Beispiel 2 in Tabelle 1 mit dem Vergleichsbeispiel 1 in Tabelle 2.
Beispiel 3 in Tabelle 1 zeigt, dass durch weitere Steigerung des Anteils an nanoskaligen Calciumcarbonatpartikeln die Thermostabilität nochmals deutlich erhöht wird.

Im Folgenden wird die Erfindung näher erläutert.

Die erfindungsgemäße PVC-Zusammensetzung besteht mindestens aus 5 Komponenten:
(I) 100 Gewichtsanteile einer Komponente (A) bestehend aus einem PVC mit einem K-Wert von 55 bis 80 gemäß ISO 1628-2;
(II) 0,1 bis 20 Gewichtsanteile einer Komponente (B), bezogen auf Komponente (A), bestehend aus Calciumcarbonat mit einer mittleren Partikelgröße von 10 bis 90 nm und einem Stearinsäure-Coating in einem Anteil von 1 bis 4 Gew.-%;
(III) 0,1 bis 10 Gewichtsanteile einer Komponente (C), bezogen auf Komponente (A), bestehend aus einem Schlagzähmodifier;
(IV) 0,1 bis 10 Gewichtsanteile einer Komponente (D), bezogen auf Komponente (A), bestehend aus einer Stabilisatormischung;
(V) 0,1 bis 10 Teile einer Komponente (E), bezogen auf Komponente (A), bestehend aus Titandioxid.

Komponente (A) der erfindungsgemäßen PVC-Zusammensetzung ist ein PVC, welches über radikalische Polymerisation hergestellt wurde und einen K-Wert von 55 bis 80 besitzt. Ganz besonders bevorzugt ist ein K-Wert von 65 bis 68.

Die Komponente (B) der erfindungsgemäßen PVC-Zusammensetzung besteht aus einem Calciumcarbonat mit einer mittleren Partikelgröße von 10 bis 90 nm. Bevorzugt sind Calciumcarbonate mit einer mittleren Partikelgröße von 50 bis 70 nm und einem Stearinsäurecoating von 1 bis 4%. Der Gewichtsanteil der Komponente (B), bezogen auf Komponente (A), kann zwischen 0,1 und 20 Teilen betragen.

Der Schlagzähmodifier der Komponente (C) kann ausgewählt werden aus der Gruppe Ethylenvinylacetat-Copolymere, (gepfropfte) Copolymere auf (Meth)Acrylat-Basis, nachchlorierte Polyethylene oder Methylmethacrylat-Butadien-Styrol-Terpolymere (MBS). Der Gewichtsanteil der Komponente (C), bezogen auf Komponente (A), kann zwischen 0,1 und 10 Teilen betragen.

Die Stabilisatormischung der Komponente (D) ist ein Stabilisator-, Gleitmittel-, Fließhilfe-Gemisch auf Calcium/Zink-Basis, wie Sie dem Fachmann aus dem Stand der Technik bekannt ist.

Neben den Calcium/Zink-Carboxylaten sind in diesen Gemischen Epoxyweichmacher, Polyole, Phosphite, sterisch gehinderte Phenole und andere Costabilisatoren enthalten. Die Gleitmittel können äußere Gleitmittel oder aber innere polare Gleitmittel sein. Zusammen mit den Fließhilfen sind Sie ausgewählt aus der Gruppe Polyethylenwachse, oxidierte Polyethylenwachse, Poly(ethylen)copolymerwachse, Esterwachse, Amidwachse, Acrylate, Polymethylmethacrylat, Fettsäuren und deren Derivate wie Butylstearat, Glycerinmonooleat, Glycerinmonostearat. Der Gewichtsanteil der Komponente (D), bezogen auf Komponente (A), kann zwischen 0,1 und 10 Teilen betragen.

Die Komponente (E) der erfindungsgemäßen PVC-Zusammensetzung besteht aus einem mit Silikonverbindungen oberflächenbehandelten und stabilisierten Titandioxidpigment aus der Rutilklasse. Der Gewichtsanteil der Komponente (E), bezogen auf Komponente (A), kann zwischen 0,1 und 10 Teilen betragen.

Die PVC-Zusammensetzung kann gegebenenfalls bis zu 200 Gewichtsanteile weiterer Zusätze, bezogen auf Komponente (A), enthalten, in Form von bis zu 5 Gewichtsanteile weiterer Pigmente, bis zu 2 Gewichtsanteile Nukleierungsmittel, bis zu 2 Gewichtsanteile Treibmittel, bis zu 2 Gewichtsanteile Antistatika, bis zu 50 Gewichtsanteile Leitfähigkeitsadditive, bis zu 3 Gewichtsanteile UV-Stabilisatoren, bis zu 100 Gewichtsanteile weiterer Füllstoffe wie Kreide, Talkum, Wollastonite, Mica, Glaskugeln oder Glasfasern, und bis zu 30 Gewichtsanteile Flammschutzadditive.

Die erfindungsgemäßen PVC-Zusammensetzungen lassen sich in bekannter Weise durch Mischen und Erwärmen der einzelnen Komponenten in einem Heizkühlmischer herstellen und danach als Dryblend auf einem Doppelschneckenextruder zu einem Extrudat verarbeiten.
Erfindungsgemäß wird die Komponente (B) der erfindungsgemäßen Zusammensetzung gleichzeitig mit oder direkt im Anschluss an Komponente (A) in den Mischer zugegeben und beide Komponenten gemeinsam 30 bis 60 Sekunden bei hoher Geschwindigkeit gemischt, bevor die restlichen Komponenten (C), (D) und (E) und evtl. weitere Zusätze zugegeben werden.
Nur so wird die gewünschte Erhöhung der Thermostabilität der Zusammensetzung erreicht.

Infolge der großen Oberfläche der Komponente (B) wird zusätzlich das Aufschmelzverhalten der Komponente (A) verbessert, welches sich in Energie- und Zeitersparnis bei der Aufbereitung äußert.

Die erfindungsgemäßen Zusammensetzungen werden bevorzugt zur Herstellung von Bauprofilen, wie Fensterprofilen, Platten oder Rohren eingesetzt.

Die folgenden Beispiele erläutern die vorliegende Erfindung, ohne dass dadurch jedoch eine Beschränkung hergeleitet werden kann.
Einige wichtige Eigenschaften der erfindungsgemäßen Zusammensetzungen gemäß den Beispielen 1 bis 5 zeigt Tabelle 1.
Das Vergleichsbeispiel 1 repräsentiert den Stand der Technik, es ist charakterisiert durch die Werte in Tabelle 2.

Die nachfolgend aufgeführten Zusammensetzungen sind in Gewichtsanteilen, bezogen auf 100 Gewichtsanteile der Komponente (A), angegeben und betragen in den folgenden Beispielen bzw. im Vergleichsbeispiel:

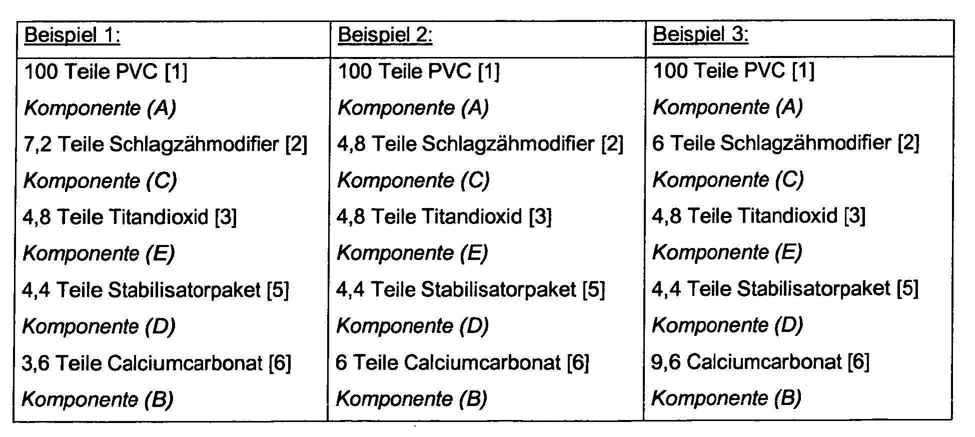

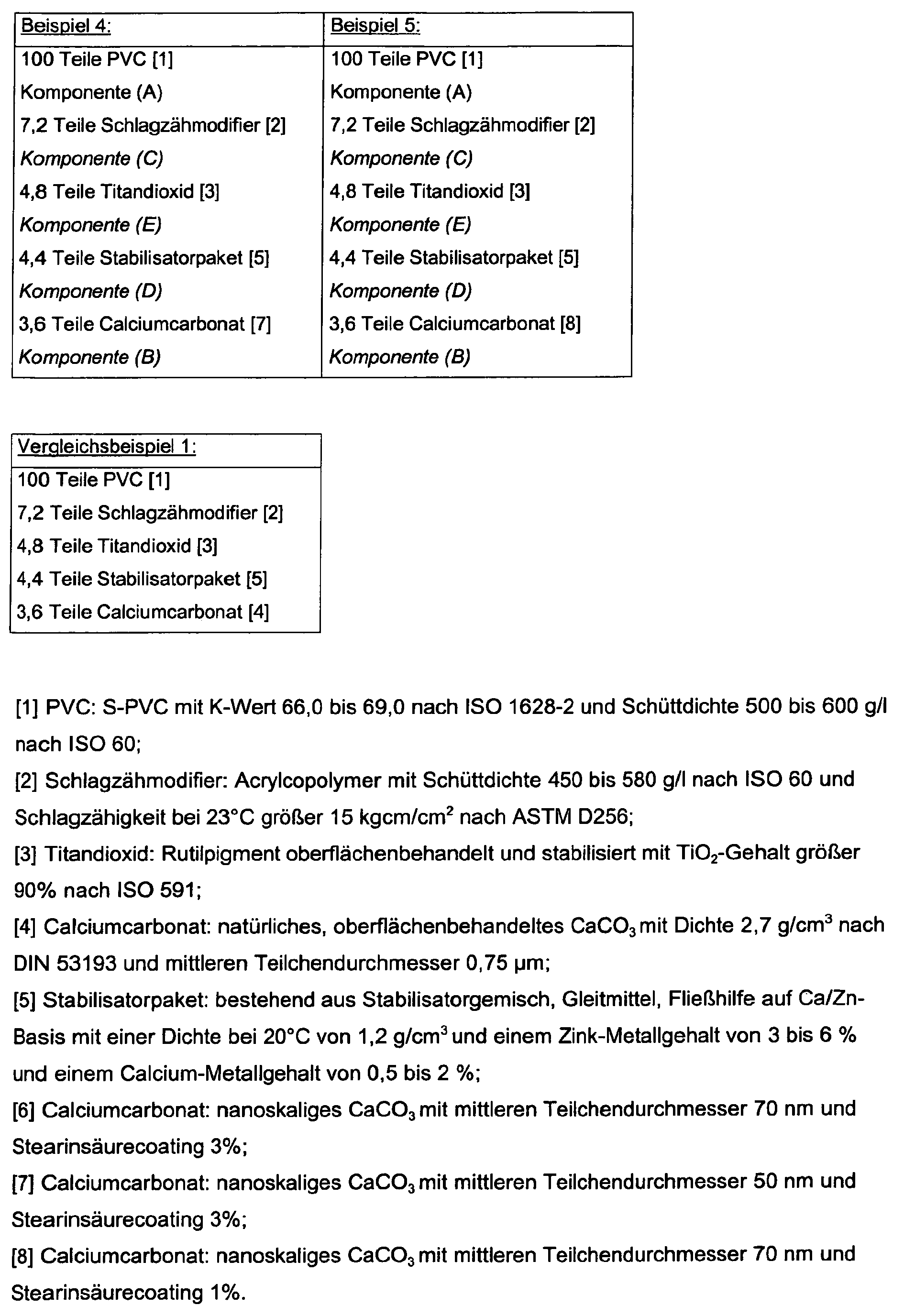

### Beispiele 1-5:

Die nachfolgende Tabelle 1 zeigt die mechanischen Eigenschaften der erfindungsgemäßen PVC Zusammensetzungen, gemessen an einem extrudierten Fensterprofil, Tabelle 2 die mechanischen Eigenschaften gemäß Vergleichsbeispiel 1.

**Tabelle 1**

| Eigenschaft | Einheit | Norm | Beispiel1 1 | Beispiel 2 | Beispiel 3 | Beispiel 4 | Beispiel 5 |
|---|---|---|---|---|---|---|---|
| Zugfestigkeit | [N/mm²] | ISO | 48,6 | 51,0 | 44,7 | 48,3 | 49,2 |
| | | 527 | | | | | |
| Reißdehnung | [%] | ISO | 183 | 193 | 167 | 165 | 179 |
| | | 527 | | | | | |
| Kerbschlagzähigkeit | [kJ/m²] | BS | K.D. | K.D. | K.D. | K.D. | K.D. |
| | | 7413:2 | | | | | |
| | | 002 | | | | | |
| Eckfestigkeit nach Verschweißung | [N] | DIN EN | 5554 | 5544 | 4950 | 5400 | 5420 |
| | | 514 | | | | | |
| DHC | [min] | ISO | 44,7 | 48,9 | 57,8 | 44,0 | 42,0 |
| | | 182-2 | | | | | |
| Glanzmessung 60°, Außen | | DIN | 74 | 70 | 75 | 70 | 72 |
| | | 67530 | | | | | |
| Glanzmessung 60°, Innen | | DIN | 77 | 66 | 68 | 69 | 65 |
| | | 67530 | | | | | |

| | | | | | | | |
|---|---|---|---|---|---|---|---|
| K.D. = kein Durchbruch | | | | | | | |

**Tabelle 2**

| Eigenschaft | Einheit | Norm | Vergleichsbeispiel1 |
|---|---|---|---|
| Zugfestigkeit | [N/mm²] | ISO | 51,3 |
| | | 527 | |
| Reißdehnung | [%] | ISO | 195 |
| | | 527 | |
| Kerbschlagzähigkeit | [kJ/m²] | BS | 17,8 |
| | | 7413:2 | |
| | | 002 | |
| Eckfestigkeit nach Verschweißung | [N] | DIN | 5552 |
| | | EN | |
| | | 514 | |
| DHC | [min] | ISO | 37,6 |
| | | 182-2 | |
| Glanzmessung 60°, Außen | | DIN | 45 |
| | | 67530 | |
| Glanzmessung 60°, Innen | | DIN | 42 |
| | | 67530 | |

## Patentansprüche

1. PVC-Zusammensetzung mit erhöhter Thermostabilität, Oberflächenqualität und Kerbschlagzähigkeit, **gekennzeichnet durch** mindestens folgende Komponenten in folgenden Anteilen:
(I) 100 Gewichtsanteile einer Komponente (A) bestehend aus einem PVC mit einem K-Wert von 55-80 gemäß ISO 1628-2;
(II) 0,1 bis 20 Gewichtsanteile einer Komponente (B), bezogen auf Komponente (A), bestehend aus Calciumcarbonat mit einer im Nanometerbereich liegende Partikelgröße und einem Stearinsäurecoating in einem Anteil von 1 bis 4 Gew.-%;
(III) 0,1 bis 10 Gewichtsanteile einer Komponente (C), bezogen auf Komponente (A), bestehend aus einem Schlagzähmodifier;
(IV) 0,1 bis 10 Gewichtsanteile einer Komponente (D), bezogen auf Komponente (A), bestehend aus einer Stabilisatormischung;
(V) 0,1 bis 10 Gewichtsanteile einer Komponente (E), bezogen auf Komponente (A), die Titandioxid ist;
wobei die Mischung der Komponenten derart erfolgt, dass in einem Heizkühlmischer die Zugabe der Komponente (B) zur Komponente (A) vor Zugabe der Komponenten (C), (D) und (E) erfolgt und die Komponenten (A) und (B) gemeinsam für 30 bis 60 Sekunden gemischt werden, bevor die restlichen Komponenten zugegeben werden.

2. PVC-Zusammensetzung nach Anspruch 1, **dadurch gekennzeichnet, dass** die Calciumcarbonatpartikel der Komponente (B) eine Partikelgröße von 10 bis 90 nm, bevorzugt von 50 bis 70 nm, aufweisen.

3. PVC-Zusammensetzung nach Anspruch 1, **dadurch gekennzeichnet, dass** der Schlagzähmodifier der Komponente (C) ausgewählt ist aus der Gruppe Ethylenvinylacetat-Copolymere, (gepfropfte) Copolymere auf (Meth)Acrylat-Basis, nachchlorierte Polyethylene oder Methylmethacrylat--Butadien-Styrol-Terpolymere (MBS).

4. PVC-Zusammensetzung nach Anspruch 1, **dadurch gekennzeichnet, dass** die Stabilisatormischung der Komponente (D) aus Calcium-/Zink-Systemen in Verbindung mit Costabilisatoren, äußeren und/oder inneren Gleitmitteln und Fließhilfen besteht.

5. PVC-Zusammensetzung nach Anspruch 1, **dadurch gekennzeichnet, dass** die Komponente (E) der erfindungsgemäßen PVC-Zusammensetzung aus einem mit Silikonverbindungen oberflächenbehandelten und stabilisierten Titandioxidpigment aus der Rutilklasse besteht.

6. Verwendung einer PVC-Zusammensetzung nach einem der Ansprüche 1 bis 5 als Dryblend vorzugsweise zu Herstellung Bauprofilen, insbesondere zu Fensterprofilen, Platten oder Rohren.
